# EUROPEAN PATENT APPLICATION

(11) **EP 3 978 556 A1**
(43) Date of publication of application: **06.04.2022**
(21) Application number: 20815680.2
(22) Date of filing: 28.05.2020
(51) Int. Cl.: C08J 7/048, B05D 3/00, B05D 3/02, B05D 7/04, B32B 3/30, B32B 7/025, B32B 7/027, B32B 27/32, B65D 65/40

(54) **PACKAGING FILM, PACKAGE, AND METHOD FOR PRODUCING LAMINATED FILM**

(30) Priority: 31.05.2019 JP 2019102614; 31.05.2019 JP 2019102559; 31.05.2019 JP 2019102645; 31.05.2019 JP 2019102565; 31.05.2019 JP 2019102681
(71) Applicant: Mitsui Chemicals Tohcello, Inc., Tokyo 101-8485 (JP)
(72) Inventor: YAMAMOTO Keiichi, Koga-shi, Ibaraki 306-0213 (JP); SAKURAI Masayuki, Koga-shi, Ibaraki 306-0213 (JP); HARANO Izumi, Koga-shi, Ibaraki 306-0213 (JP); HARA Tsutomu, Koga-shi, Ibaraki 306-0213 (JP); MORITA Ryousuke, Koga-shi, Ibaraki 306-0213 (JP); WAKAKI Hiroyuki, Koga-shi, Ibaraki 306-0213 (JP); HAKAMATA Tomoyoshi, Koga-shi, Ibaraki 306-0213 (JP); MATSUO Hiroshi, Koga-shi, Ibaraki 306-0213 (JP); TAKEISHI Ichiro, Tokyo 101-8485 (JP)
(74) Representative: Hoffmann Eitle
(86) International application number: PCT/JP2020/021230
(87) International publication number: WO 2020/241793

(57) **Abstract**

Provided is a packaging film including: a substrate layer that includes polyethylene; and a coating layer that includes a resin and is provided in contact with one surface of the substrate layer or is provided over one surface of the substrate layer through an anchor coat layer. In one preferable aspect of the packaging film, when a glass transition temperature of the coating layer is represented by Tgc and a glass transition temperature of the substrate layer is represented by Tgs, a value of Tgc is -25°C to 120°C and a value of Tgc - Tgs is 90°C to 245°C.

## Description

### TECHNICAL FIELD

The present invention relates to a packaging film, a package, and a method of manufacturing a laminated film. More specifically, the present invention relates to a packaging film, a package that is formed of the packaging film, and a method of manufacturing a laminated film that is preferably used as the packaging film.

### BACKGROUND ART

In the field of the packaging film, various attempts to devise materials to be used, a layer configuration, or the like to improve various performances are known.

For example, Patent Document 1 describes a laminated film obtained by bonding two biaxially stretched plastic films including a vinylidene chloride copolymer layer on a single surface such that surfaces of the vinylidene chloride copolymer layers face each other and thermally compressing the laminate (the adhesive strength of the two films is 10 to 50 gf/15 mm or lower). Patent Document 1 describes that this laminated film is strong to wear or thrust (a pinhole is not likely to be formed) and has excellent gas barrier properties.

In another example, Patent Document 2 describes a multilayer film in which a gas barrier layer, an overcoat layer, an adhesive layer, and a sealant layer are sequentially laminated on at least one surface of a substrate layer formed of a thermoplastic resin, the gas barrier layer being formed by applying a dispersion including an inorganic layer compound and a water-soluble polymer, and the overcoat layer including a cationic resin and a resin having a hydroxyl group. Patent Document 2 describes that this multilayer film has excellent heat sealing properties and gas barrier properties.

In still another example, Patent Document 3 describes a barrier film including a substrate layer, an inorganic layer, and a polyvinylidene chloride resin layer in this order. When the polyvinylidene chloride resin layer of the barrier film is measured by infrared spectroscopy, a peak ratio (A(1046)/A(1070)) of an absorption peak height A (1046) at a wave number near 1046 cm⁻¹ to an absorption peak height A (1070) at a wave number near 1070 cm⁻¹ is 1.3 or lower. Patent Document 3 describes that this barrier film has excellent blocking resistance.

### RELATED DOCUMENT

### PATENT DOCUMENT

[Patent Document 1] Japanese Unexamined Patent Publication No. H10-337825
[Patent Document 2] Japanese Unexamined Patent Publication No. 2009-241359
[Patent Document 3] Japanese Unexamined Patent Publication No. 2017-114079

### SUMMARY OF THE INVENTION

### TECHNICAL PROBLEM

Recently, environmental awareness has risen, in particular, problems such as marine plastic pollution have attracted attention. Therefore, packaging films have come under scrutiny. The recycling of packaging films has been further required as compared to the past. In other words, packaging films are required to be designed and manufactured in consideration of "easy recycling".

In most of the packaging films, desired effects (for example, strength or gas barrier properties) are obtained by laminating various kinds of materials. For example, the multilayer film described in Patent Document 2 includes at least four layers including the gas barrier layer, the overcoat layer, the adhesive layer, and the sealant layer. However, the lamination of various kinds of materials leads to difficult recycling.

From the viewpoint of easily recycling packaging films, for example, it is considered to adopt a very simple layer configuration.

From the viewpoint of simplifying the layer configuration, it is actively considered to form a packaging film with a single layer.

The present inventors conducted a preliminary investigation on various properties required for packaging films using a polyethylene film that is a versatile packaging material having a relatively low cost. As a result of the investigation, the polyethylene "single-layer" film has a room for improvement of, for example, blocking resistance. In addition, when a package is manufactured using this packaging film, there is a room for improvement of openability (easiness to open) of the package.

An object of the present invention is to provide a packaging film in which blocking resistance and/or oxygen barrier properties that is insufficient in a polyethylene single-layer film is improved, a package having excellent openability that is formed of the packaging film, and an excellent manufacturing method that prevents cracking or the like in a packaging film.

### SOLUTION TO PROBLEM

The present invention is represented, for example, as follows.

1. A packaging film including:
   a substrate layer that includes polyethylene; and
   a coating layer that includes a resin and is provided in contact with one surface of the substrate layer or is provided over one surface of the substrate layer through an anchor coat layer,
   in which when a glass transition temperature of the coating layer is represented by Tgc and a glass transition temperature of the substrate layer is represented by Tgs, a value of Tgc is -25°C to 120°C and a value of Tgc - Tgs is 90°C to 245°C.
2. A packaging film including:
   a substrate layer that includes polyethylene; and
   a coating layer that includes a resin different from polyethylene and is provided in contact with one surface of the substrate layer or is provided over one surface of the substrate layer through an anchor coat layer,
   in which a part or an entirety of the surface of the coating layer is an exposed surface, and
   in which a ten point average roughness SRz of the exposed surface obtained by three-dimensional surface measurement is 0.50 µm or more.
3. A packaging film including:
   a substrate layer that includes polyethylene; and
   a coating layer that includes a resin different from polyethylene and is provided in contact with one surface of the substrate layer or is provided over one surface of the substrate layer through an anchor coat layer,
   a part or an entirety of the surface of the coating layer is an exposed surface, and
   a thickness of the coating layer is 0.3 to 4.5 µm.
4. A packaging film including:
   a substrate layer that includes polyethylene; and
   a coating layer that includes one or more resins selected from the group consisting of polyurethane, polyvinyl alcohol, and polyvinylidene chloride and is provided in contact with one surface of the substrate layer or is provided over one surface of the substrate layer through an anchor coat layer,
   in which a thickness of the coating layer is less than a thickness of the substrate layer.
5. The packaging film according to any one of 1. to 4.,
   in which a thickness of the coating layer is 0.3 to 2.0 µm.
6. The packaging film according to any one of 1. to 5.,
   in which a thickness of the substrate layer is 10 to 150 µm.
7. The packaging film according to any one of claims 1. to 3., in which the coating layer includes one or more resins selected from the group consisting of polyurethane, polyvinyl alcohol, and polyvinylidene chloride.
8. The packaging film according to any one of 1. to 7.,
   in which an oxygen permeability measured under conditions of a temperature of 23 ± 2°C and a humidity of 90 ± 1.0% RH is lower than 1.0 × 10⁵ mL/ (m²·day·MPa) and/or an oxygen permeability measured under conditions of a temperature of 23 ± 2°C and a humidity of 50 ± 1.0% RH is lower than 1.0 × 10⁵ mL/(m²·day·MPa).
9. The packaging film according to any one of 1. to 8.,
   in which the glass transition temperature Tgs of the substrate layer is -130°C to -120°C.
10. The packaging film according to any one of 1. to 9.,
   in which the coating layer does not have a melting point or has a melting point of 120°C to 230°C.
11. The packaging film according to 1., 3., or 4.,
   in which the coating layer is present on an outermost surface of the packaging film, and
   a ten point average roughness SRz of the surface of the coating layer obtained by three-dimensional measurement is 0.50 µm or more.
12. The packaging film according to any one of 1. to 11., in which the coating layer is present on an outermost surface of the packaging film, and
   a kurtosis SRku of the surface of the coating layer obtained by three-dimensional measurement is 25 or higher.
13. The packaging film according to any one of 1. to 12., in which a static friction coefficient between the surfaces of the substrate layers is 0.08 to 2.50.
14. The packaging film according to any one of 1. to 13., in which a surface resistivity of the coating layer is 1 × 10¹² to 1 × 10¹⁵ Ω.
15. The packaging film according to any one of 1. to 14., in which the coating layer includes a surfactant, and
   a proportion of the surfactant in the coating layer is 0.8 to 7.5 mass%.
16. A package that is formed of the packaging film according to any one of 1. to 15..
17. The package according to 16.,
   in which the coating layer is present on an outer surface.
18. A method of manufacturing a laminated film including a substrate layer that includes polyethylene and a coating layer that includes a resin and is provided on one surface side of the substrate layer directly or through an anchor coat layer, the method including:
   an application step of applying an application liquid including at least a resin and water to the surface side of the substrate layer; and
   a drying step of heating the applied application liquid in an atmosphere of 60°C to 100°C.
19. The method of manufacturing a laminated film according to 18.,
   in which the resin includes one or more resins selected from the group consisting of polyurethane, polyvinyl alcohol, and polyvinylidene chloride.
20. The method of manufacturing a laminated film according to 18. or 19.,
   in which the application liquid includes a surfactant, and a proportion of the surfactant in non-volatile components of the application liquid is 0.8 to 7.5 mass%.
21. The method of manufacturing a laminated film according to any one of 18. to 20.,
   in which the application liquid further includes an alcohol solvent.
22. The method of manufacturing a laminated film according to 21.,
   in which the alcohol solvent includes an alcohol having 1 to 4 carbon atoms.
23. The method of manufacturing a laminated film according to 21. or 22.,
   in which the alcohol solvent includes 2-propanol.
24. The method of manufacturing a laminated film according to any one of 21. to 23.,
   in which a proportion of the alcohol solvent in volatile components of the application liquid is 10 to 50 mass%.
25. The method of manufacturing a laminated film according to any one of 18. to 24.,
   in which a glass transition temperature of the substrate layer is -130°C to -120°C.
26. The method of manufacturing a laminated film according to any one of 18. to 25.,
   in which an application amount of the application liquid in the application step is 0.3 to 4.5 g/m² in terms of non-volatile components.
27. The method of manufacturing a laminated film according to any one of 18. to 26.,
   in which a time of the drying step is 5 to 120 seconds.
28. The method of manufacturing a laminated film according to any one of 18. to 27.,
in which the anchor coat layer includes a urethane resin and/or a (meth)acrylic resin.

### ADVANTAGEOUS EFFECTS OF INVENTION

The present invention can provide a packaging film in which blocking resistance and/or oxygen barrier properties that is insufficient in a polyethylene single-layer film is improved, a package having excellent openability and the like that is formed of the packaging film, and an excellent manufacturing method that prevents cracking or the like in a packaging film.

### BRIEF DESCRIPTION OF THE DRAWINGS

Fig. 1 is a diagram schematically showing a layer configuration of a packaging film.
Fig. 2 is a diagram showing a method of manufacturing "butt-seam bag".
Fig. 3 is a diagram schematically showing a state of a portion α in Fig. 2 when seen from a direction of an arrow shown in Fig. 2 (case where the butt-seam bag is formed of a single-layer film).
Fig. 4 is a diagram schematically showing a state of a portion α in Fig. 2 when seen from a direction of an arrow shown in Fig. 2 (case where the butt-seam bag is formed of a film having a two-layer configuration).
Fig. 5 is a diagram schematically showing a layer configuration of a packaging film different from that in Fig. 1.

### DESCRIPTION OF EMBODIMENTS

Hereinafter, embodiments of the present invention will be described in detail with reference to the drawings.

In all the drawings, the same components are represented by the same reference numerals, and the description thereof will not be repeated.

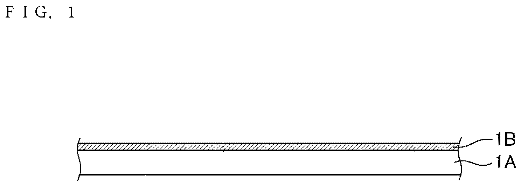

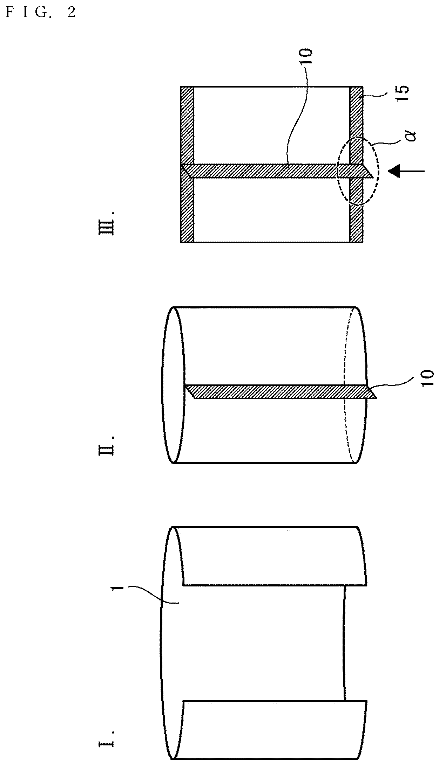

In order to avoid complication, (i) when a plurality of the same components are present on the same drawing, there may be a case where the reference numeral is given to only one component without giving the reference numeral to all the components; and (ii) in the drawings after Fig. 2, there may be a case where the reference numeral is not given again to the same components as those of Fig. 1.

All the drawings are merely illustrative. The shapes, a dimensional ratio, and the like of each of members in the drawings do not necessarily correspond to those of an actual article.

In the present specification, the expression "X to Y" in the description of a numerical range represents X or more and Y or less unless specified otherwise. For example, "1 to 5 mass%" represents "1 mass% or higher and 5 mass% or lower".

In the present specification, the expression "group (atomic group)" encloses both a group not having a substituent and a group having a substituent unless specified that the group is substituted or unsubstituted. For example, "alkyl group" encloses not only an alkyl group not having a substituent (unsubstituted alkyl group) but also an alkyl group having a substituent (substituted alkyl group).

The expression "(meth)acryl" in the present specification represents a concept including acryl and methacryl. The same shall be applied to similar expressions such as "(meth)acrylate".

### <Packaging Film>

Fig. 1 is a diagram schematically showing a layer configuration of a packaging film according to an embodiment. The packaging film according to the present embodiment includes:
• a substrate layer 1A that includes polyethylene (hereinafter, also referred to as "substrate layer 1A"); and
a coating layer that includes a resin and is provided in contact with one surface of the substrate layer 1A or is provided over one surface of the substrate layer through an anchor coat layer
(the anchor coat layer is not shown in Fig. 1).

In one preferable aspect, when a glass transition temperature of the coating layer 1B is represented by Tgc and a glass transition temperature of the substrate layer 1A is represented by Tgs, a value of Tgc is -25°C to 120°C and a value of Tgc - Tgs is 90°C to 245°C.

In one preferable aspect, a part or an entirety of the surface of the coating layer 1B is an exposed surface. A ten point average roughness SRz of the exposed surface obtained by three-dimensional surface measurement is 0.50 µm or more.

In one preferable aspect, a part or an entirety of the surface of the coating layer 1B is an exposed surface, and a thickness of the coating layer 1B is 0.3 to 4.5 µm.

In one preferable aspect, the coating layer 1B includes one or more resins selected from the group consisting of polyurethane, polyvinyl alcohol, and polyvinylidene chloride.

The substrate layer 1A may be a single layer or may be a laminate in which two or more layers are laminated.

In the packaging film according to the present embodiment, regarding a film of a polyethylene single layer, in order to improve insufficient blocking resistance or to improve the openability of a packaging pouch, the specific coating layer (coating layer 1B) is provided on one surface of the polyethylene film (substrate layer 1A) .

Due to the presence of the coating layer 1B, the contact between the substrate layers 1A is suppressed such that blocking resistance is improved. In a preferable aspect, for example, (i) the glass transition temperature Tgc of the coating layer 1B is -25°C to 120°C, and (ii) the difference between Tgc and Tgs (the glass transition temperature of the substrate layer) is 90°C to 245°C. As a result, blocking resistance is improved.

((ii) represents that the resin in the coating layer 1B is less likely to undergo molecular motion (thermal motion) than the resin in the substrate layer 1A. It is presumed that, by covering one surface of the layer (substrate layer 1A) that is more likely to undergo molecular motion with the layer (coating layer 1B) that is less likely to undergo molecular motion, blocking is not likely to occur. In addition, it is presumed that the coating layer 1B satisfies the condition (i) such that blocking between the coating layers 1B is suppressed).

In addition, in the packaging film according to the present embodiment, blocking resistance can be improved, and a packaging pouch having excellent openability can be obtained. In particular, in a bag-making heat sealing step, the packaging film is suitable as a film that is provided for a pouch package such as a butt-seam bag or a standing pouch (hereinafter, also referred to as "butt-seam bag or the like") that is heat-sealed in a state where it overlaps a heat-sealed portion.

Hereinafter, "openability" will be described using the manufacturing of a butt-seam bag as an example.

The butt-seam bag is a bag obtained by bonding the back and the bottom of one film and is widely used for packaging food products such as confectioneries. As shown in Fig. 2, the manufacturing (bag-making) of the butt-seam bag is typically manufactured according to the following procedure.
I. First, a horizontally long film 1 is bent in a cylindrical shape.
II. Next, a back surface is heat-sealed to provide a back surface heat-sealed portion 10.
III. Next, a bottom surface is heat-sealed to provide a bottom surface heat-sealed portion 15.

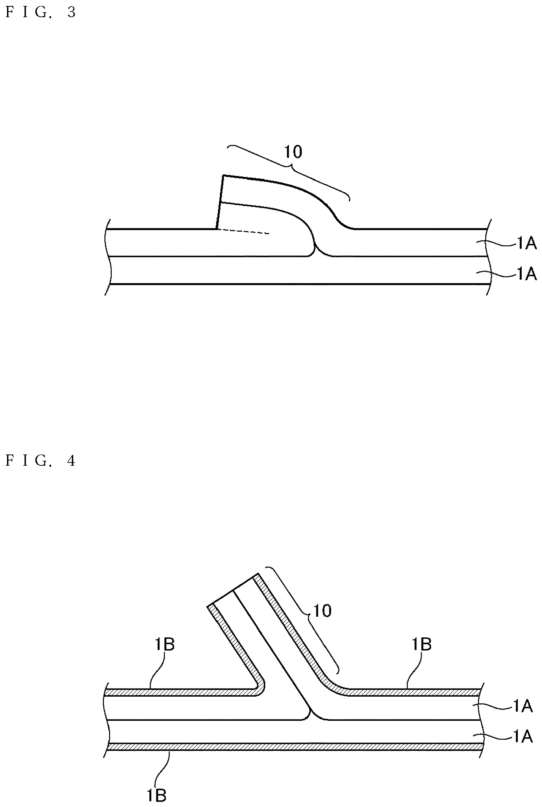

When the butt-seam bag is manufactured according to the above-described procedure, heat is applied by heat sealing to the portion α surrounded by a broken line in Fig. 2 twice. Accordingly, when the film 1 is a single-layer film consisting of only the substrate layer 1A including polyethylene, as shown in Fig. 3, in the portion α, a part of an outer surface of the back surface heat-sealed portion 10 is fused with the substrate layer 1A including polyethylene at the position indicated by the broken line in the drawing. In the present specification, whether or not heat fusion occurs in the back surface heat-sealed portion 10 will also be called "heat fusion properties of the back surface heat-sealed portion"

(Fig. 3 is a diagram schematically showing a state of the portion α in Fig. 2 when seen from the direction of the arrow shown in Fig. 2 in a case where the film1 is formed of a single-layer film consisting of only the substrate layer 1A including polyethylene).

This heat fusion is not preferable from the viewpoint of opening easiness when a consumer opens the butt-seam bag or the viewpoint of good appearance of the butt-seam bag or the like.

However, as in the packaging film according to the present embodiment, by causing the coating layer 1B to be present on one surface of the substrate layer 1A, the above-described problem can be solved. Specifically, a butt-seam bag is manufactured as shown in "I. to III." described above using the packaging film according to the present embodiment such that the side of the coating layer 1B is the outer surface side. As a result, as shown in Fig. 4, in the portion α, the melting of the outer surface of the back surface heat-sealed portion 10 or the heat fusion with another portion is suppressed.

(Fig. 4 is a diagram schematically showing a state of the portion α in Fig. 2 when seen from the direction of the arrow shown in Fig. 2 in a case where the film 1 includes the substrate layer 1A and the coating layer 1B).

In the present embodiment, it is preferable that the glass transition temperature Tgc of the coating layer 1B is sufficiently higher than the glass transition temperature Tgs of the substrate layer 1A. In addition, it is preferable that Tgc itself is sufficiently high. As a result, by performing heat sealing at an appropriate temperature in III. described above, only the substrate layer 1A can be melted without melting the coating layer 1B.

In conclusion, the packaging film according to the present embodiment has the effect that the butt-seam bag or the like having opening easiness and good appearance can be obtained".

The substrate layer 1A has an important role during bag making by heat sealing. Therefore, it can be said that the substrate layer 1A can be "substrate layer" and "heat sealing layer" (the substrate layer can also function as the heat sealing layer) . Further, in the packaging film according to the present embodiment, bag making or sealing by heat sealing can be performed without providing the heat sealing layer separately (typically, the melting point of the polyethylene is low). The configuration where the heat sealing layer does not need to be provided separately is preferable from the viewpoint of simplifying the layer configuration or reducing the kinds of materials to be used. In this case, there is no interference when the substrate layer 1A according to the present embodiment has a multi-layer configuration.

As described above, the packaging film according to the present embodiment has excellent blocking resistance irrespective of the relatively simple configuration. In addition, the packaging film according to the present embodiment has an advantageous effect that, for example, a butt-seam bag having opening easiness can be manufactured. Further, in the packaging film according to the present embodiment, the heat sealing layer does not need to be provided separately.

The packaging film according to the present embodiment will be continuously described.

### (Substrate Layer 1A)

- Regarding Materials and the like of Substrate Layer 1A The substrate layer 1A includes one kind or two or more kinds of polyethylene.

The polyethylene may be any one of high density polyethylene, medium density polyethylene, linear low-density polyethylene (L-LDPE), low density polyethylene, and the like. Among these, linear low-density polyethylene (L-LDPE) is preferable from the viewpoints of applicability to packaging or heat sealing properties.

The linear low-density polyethylene (L-LDPE) is typically a copolymer of ethylene and a slight amount of α-olefin. The kind of the α-olefin is not particularly limited. Typical examples of the α-olefin include 1-butene, 1-hexene, and 4-methylpentene-1,1-octene.

From the viewpoint of further improving a balance between various performances such as heat resistance, transparency, mechanical properties, and rigidity, the density of the polyethylene is preferably 900 to 965 kg/m³ and more preferably 900 to 940 kg/m³. The density of the polyethylene can be measured according to JIS K 7112 (1999).

From the viewpoint of fluidity or moldability, the melt flow rate (MFR) of the polyethylene is preferably 0.5 g/10 minutes or more, more preferably 1 g/10 minutes or more, and still more preferably 2 g/10 minutes or more. In addition, from the viewpoint of further stabilizing moldability, the MFR is preferably 30 g/10 minutes or less, more preferably 20 g/10 minutes or less, and still more preferably 10 g/10 minutes or less. The MFR is measured according to ASTM D1238 under conditions of 190°C and a load of 2.16 kg.

The substrate layer 1A may include various additives. Examples of the additives include a heat resistance stabilizer, a weathering stabilizer, an antioxidant, an ultraviolet absorber, a lubricant, a slipping agent, a nucleating agent, an anti-blocking agent, an antistatic agent, an anti-fog agent, a pigment, a dye, and an inorganic or organic filler.

The substrate layer 1A may be formed of a stretched film, may be formed of a non-stretched film, or may be formed of both a stretched film and a non-stretched film. From the viewpoint of improving the mechanical strength of the film, it is preferable that the substrate layer 1A is formed of a stretched film, and it is more preferable that the substrate layer 1A is formed of a biaxially stretched film. On the other hand, from the viewpoint of improving the heat sealing strength, it is preferable that a surface of the substrate layer 1A opposite to the coating layer is formed of a non-stretched film.

In one aspect, the substrate layer 1A may be laminate in which two or more layers are laminated.

When the substrate layer 1A is a laminate, the substrate layer 1A may include two or more different kinds of polyethylene resins and the respective layers may have compositions of different polyethylene resins.

The substrate layer 1A as the laminate may be manufactured using any method. For example, the substrate layer 1A as the laminate is manufactured using a dry laminating method of bonding the layers using an adhesive, a method of bonding the layers during film formation such as extrusion without using an adhesive, a combination thereof, or the like.

The polyethylene-containing film configuring the substrate layer 1A is available from, for example, Mitsui Chemicals Tohcello, Inc.

### • Thickness of Substrate Layer 1A

The thickness of the substrate layer 1A is preferably 10 to 150 µm, more preferably 15 to 80 µm, and still more preferably 30 to 60 µm. By adjusting the thickness of the substrate layer 1A to be 10 µm or more, the mechanical strength of the packaging film can be improved. By adjusting the thickness of the substrate layer 1A to be 150 µm or less, the handling properties, bag making suitability, lightness, and the like of the packaging film can be improved.

### • Physical properties, Characteristics, and the like of Substrate Layer 1A

The static friction coefficient µ of the surface of the substrate layer 1A is preferably 0.08 to 2.50, more preferably 0.09 to 2.00, still more preferably 0.10 to 1.50, still more preferably 0.10 to 1.30, still more preferably 0.10 to 0.60, and most preferably 0.10 to 0.35. By adjusting the static friction coefficient to be appropriate value, for example, when the coating layer 1B is provided on one surface of the substrate layer 1A by application, an effect of easily forming the thin and uniform coating layer 1B can be expected. In addition, by adjusting the static friction coefficient to be an appropriate value, an effect that the handling properties of the film can be improved can also be expected.

When one surface of the substrate layer 1A is treated (for example, a corona treatment described below), the measurement of the static friction coefficient may be performed on any one of non-treated surfaces, treated surfaces, or a non-treated surface and a treated surface.

In particular, from the viewpoint of the effect of easily forming the thin and uniform coating layer 1B, a static friction coefficient µ₁ between the surfaces of the substrate layers 1A on the coating layer 1B side is preferably in the numerical range described above regarding µ. µ₁ is more preferably 0.10 to 0.80, still more preferably 0.12 to 0.75, and still more preferably 0.14 to 0.68.

The static friction coefficient of the substrate layer 1A can be adjusted, for example, (i) by treating the surface of the substrate layer 1A (polyethylene-containing film) before providing the coating layer 1B or the anchor coat layer or (ii) by adjusting the kinds or amounts of the various additives in the substrate layer 1A (polyethylene-containing film).

Specific examples of (i) include surface modification (corona treatment) by corona discharge irradiation.

Specific examples of (ii) include adjusting the amount or kind of the slipping agent in the substrate layer 1A.

The measurement of the static friction coefficient can be performed as shown in, for example, Examples described below.

A ten point average roughness SRz of the surface of the substrate layer 1A on the coating layer 1B side obtained by three-dimensional measurement is preferably 1.8 µm or more, more preferably 1.8 to 3.5 µm, and still more preferably 1.9 to 3.2 µm.

In addition, a kurtosis SRku of the same surface obtained by three-dimensional measurement is preferably 120 to 300.

A method of measuring SRz or SRku will be described in detail in the description of the coating layer 1B.

Although the details will described below, by appropriately adjusting the surface roughness or the like of the coating layer 1B, the blocking resistance can be improved. By adjusting the surface roughness of the substrate layer 1A, the surface quality of the coating layer 1B formed on the substrate layer 1A by application can be easily adjusted.

When the coating layer 1B is thin, the surface roughness of the substrate layer 1A is likely to be reflected on the surface roughness of the coating layer 1B. Accordingly, for example, by adjusting the surface roughness of the substrate layer 1A to be about the above-described numerical value, the surface roughness of the coating layer 1B can be easily adjusted to be an appropriate value.

The surface roughness of the substrate layer 1A can be adjusted by a manufacturing method thereof (method of forming the polyethylene-containing film), the use of an appropriate additive, or an appropriate surface treatment (for example, corona treatment) . In addition, a polyethylene-containing film having an appropriate surface roughness may be selected from commercially available polyethylene-containing films and used as the substrate layer 1A.

### (Coating Layer 1B)

### • Material of Coating Layer 1B

It is preferable that the coating layer 1B includes one or more resins selected from the group consisting of polyurethane, polyvinyl alcohol, and polyvinylidene chloride. These resins are preferable from the viewpoints of further improving oxygen barrier properties, blocking resistance, and the like.

Oxygen barrier properties are often required for the packaging film. Accordingly, it is preferable that the coating layer 1B includes a resin having high oxygen barrier properties such as polyurethane, polyvinyl alcohol, or polyvinylidene chloride.

It is preferable that the thickness of the coating layer 1B is less than the thickness of the substrate layer 1A.

A proportion of the resin in the coating layer 1B is preferably 80 mass% or higher and more preferably 90 mass% or higher.

When the coating layer 1B includes polyurethane, the kind of the polyurethane is not particularly limited. The polyurethane may include a structural unit derived from polyol and a structural unit derived from polyisocyanate.

The polyurethane may be a well-known or commercially available thermoplastic polyurethane. Examples of the polyurethane include an adipate ester-based thermoplastic polyurethane, a polyether-based thermoplastic polyurethane, a polycarbonate-based thermoplastic polyurethane, and a polycaprolactone-based thermoplastic polyurethane.

When the coating layer 1B includes polyvinyl alcohol, the kind of the polyvinyl alcohol is not particularly limited.

The polyvinyl alcohol is typically obtained by saponification of polyvinyl acetate. 67A so-called partially saponified polyvinyl alcohol in which several ten % of an acetic acid group remains, a completely saponified polyvinyl alcohol in which several ten % of an acetic acid group remains, and the like are also included in usable polyvinyl alcohol.

Of course, a method of manufacturing the polyvinyl alcohol is not particularly limited.

The polyvinyl alcohol may be a homopolymer obtained by polymerization using only vinyl acetate as a monomer or may be a copolymer including a structural unit derived from a monomer other than vinyl acetate. When the polyvinyl alcohol is a copolymer, examples of copolymerizable components include: (1) olefins such as ethylene, propylene, or 1-butene; (2) unsaturated carboxylic acids such as (meth)acrylic acid, crotonic acid, maleic acid, or fumaric acid and esters, salts, anhydrides, and amides thereof; (3) unsaturated nitriles such as (meth)acrylonitrile; and (4) vinyl ethers such as methyl vinyl ether or ethyl vinyl ether.

The polyvinyl alcohol is available from, for example, Kuraray Co., Ltd.

When the coating layer 1B includes polyvinylidene chloride, the polyvinylidene chloride is not particularly limited as long as it includes a structural unit corresponding to a vinylidene chloride monomer. The polyvinylidene chloride (i) may include only a structural unit derived from a vinylidene chloride monomer or (ii) may be a copolymer including a vinylidene chloride monomer and another monomer copolymerizable with vinylidene chloride.

Examples of the copolymer in (ii) include a copolymer in which a proportion of the structural unit derived from the vinylidene chloride monomer is 60 to 99 mass% and a proportion of the structural unit derived from the monomer copolymerizable with vinylidene chloride is 1 to 40 mass%. Examples of the monomer copolymerizable with vinylidene chloride include vinyl chloride, (meth) acrylonitrile, (meth)acrylic acid, (meth)acrylic acid alkyl ester (the number of carbon atoms in the alkyl group is 1 to 18), maleic anhydride, itaconic acid, itaconic acid alkyl ester, vinyl acetate, ethylene, propylene, isobutylene, and butadiene.

The polyvinylidene chloride is available from, for example, Asahi Kasei Corporation.

### • Thickness of Coating Layer 1B

The thickness of the coating layer 1B is, for example, 0.3 to 4.5 µm, preferably 0.3 to 2.0 µm, more preferably 0.4 to 1.8 µm, and still more preferably 0.5 to 1.7 µm.

By adjusting the thickness to be appropriate, (i) the blocking resistance can be sufficiently improved, and (ii) a butt-seam bag or the like in which fusion between heat-sealed portions is sufficiently suppressed can be obtained. Regarding (ii), specifically, the opening easiness of the butt-seam bag can be improved, and regarding a pouch package, the volume of the packaging pouch can be increased by fusion of overlapping portions of heat-sealed portions.

Surprisingly, the blocking resistance is not simply improved as the coating layer 1B becomes thicker, and by adjusting the coating layer 1B not to be excessively thin and excessively thick, the blocking resistance can be further improved. The reason for this is presumed to be, for example, a fine balance between the thickness of the coating layer 1B and unevenness in the substrate layer 1A. The more details are as follows.

When the coating layer 1B is thin, it is presumed that the coating layer 1B is "not completely embedded" in the unevenness of the surface of the substrate layer 1A, and thus the surface roughness of the surface of the coating layer 1B (surface opposite to the substrate layer 1A) is reflected to some extent by the characteristics of the surface of the substrate layer 1A. In other words, when the coating layer 1B is appropriately thin, it can also be said that the coating layer 1B allows the unevenness or roughness of the surface of the substrate layer 1A "to remain appropriately".

In addition/alternatively, when the coating layer 1B is provided by application, if the application amount of the application liquid is small, volatile components are volatilized before the applied application liquid is leveled, that is, is smoothened. Therefore, it is presumed that the surface of the formed coating layer 1B is likely to be relatively rough.

Incidentally, as an experimental fact, when the coating layer 1B is provided by application, if the application amount of the application liquid increases, the surface roughness of the coating layer 1B tends to decrease. This experimental fact will be shown in Examples below.

Incidentally, it is presumed that, by adjusting the coating layer 1B to be appropriately thin, the surface of the coating layer 1B is appropriately rough.

It is presumed that, due to this "roughness", when the films come into contact with each other, the close contact between the films can be avoided (the contact area between the films can be reduced), and the blocking resistance can be further improved.

### • Roughness or the like of Coating Layer 1B

The coating layer 1B is typically present on the outermost surface of the packaging film. In other words, a part or the entirety of the coating layer 1B is typically "exposed".

In the coating layer 1B present on the outermost surface of the packaging film, the ten point average roughness SRz obtained by three-dimensional measurement is preferably 0.50 µm or more, more preferably 0.80 µm or more, still more preferably 1.20 µm or more, and still more preferably 1.40 µm or more. Although the upper limit of SRz is not particularly limited, realistically, SRZ is, for example, 3.2 µm or less and preferably 2.7 µm or less.

In addition, in the coating layer 1B present on the outermost surface of the packaging film, the kurtosis SRku obtained by three-dimensional measurement is preferably 25 or higher, more preferably 50 or higher, still more preferably 100 or higher, still more preferably 200 or higher, still more preferably 220 or higher, and most preferably 240 or higher. Although the upper limit of SRku is not particularly limited, realistically, SRku is, for example, 400 or lower, preferably 300 or lower, and more preferably 250 or lower.

As described above regarding "thickness" of the coating layer 1B, it is presumed that the blocking resistance can be further improved by roughening the surface of the coating layer 1B.

In addition, it is presumed that,in particular, SRz and SRku among parameters of the surface roughness correlate with the blocking resistance.

In the present embodiment, in particular, "both" of SRz and SRku are in the respective preferable numerical ranges such that the blocking resistance can be further improved. In other words, by designing the packaging film in consideration of SRz and SRku as an integrated index, the blocking resistance can be further improved.

SRz or SRku can be obtained by measuring the surface of the coating layer 1B using a commercially available measuring device capable of measuring three-dimensional surface quality (surface roughness). As the measuring device, for example, a three-dimensional surface roughness measuring instrument SE-3500 (manufactured by Kosaka Laboratory Ltd.) or a measuring device having the same measurement principle as SE-3500 can be used.

In addition, SRz or SRku is a parameter relating to the three-dimensional surface quality (surface roughness) instead of two-dimensional surface quality (line roughness). It is presumed that, regarding the occurrence or reduction of blocking, it is important to consider "contact between surfaces of the films". Therefore, it is reasonable to design and optimize the surface quality of the coating layer 1B based on the three-dimensional surface quality instead of the two-dimensional surface quality.

### • Unifomity/Oxygen Permeability of Coating Layer 1B

In the packaging film according to the present embodiment, the oxygen permeability of the film can set as an index representing the coating layer 1B is uniformly provided. The oxygen permeability of a resin material such as polyurethane, polyvinyl alcohol, or polyvinylidene chloride is typically lower than that of polyethylene.

Specifically, it is preferable that, in the packaging film according to the present embodiment, an oxygen permeability measured under conditions of a temperature of 23 ± 2°C and a humidity of 90 ± 1.0% RH is lower than 1.0 × 10⁵ mL/ (m²·day·MPa) and/or an oxygen permeability measured under conditions of a temperature of 23 ± 2°C and a humidity of 50 ± 1.0% RH is lower than 1.0 × 10⁵ mL/ (m²·day·MPa) .

By reducing the oxygen permeability, the packaging film according to the present embodiment can be preferably applied to, for example, a packaging pouch for food products. Of course, the packaging film according to the present embodiment can be used for various applications other than food products.

The upper limit of the oxygen permeability (under the conditions of a temperature of 23 ± 2°C and a humidity of 90 ± 1.0% RH or under the conditions of a temperature of 23 ± 2°C and a humidity of 50 ± 1.0% RH) is more preferably 5.0 × 10⁴ mL/(m²·day·MPa) or lower and still more preferably 1.0 × 10⁴ mL/(m²·day·MPa) or lower.

From the viewpoint of barrier properties, it is preferable that the oxygen permeability is as low as possible (ideally, 0). In this case, from the viewpoint of the realistic design of the film, the oxygen permeability (under the conditions of a temperature of 23 ± 2°C and a humidity of 90 ± 1.0% RH or the conditions of a temperature of 23 ± 2°C and a humidity of 50 ± 1.0% RH) is, for example, 0.1 mL/(m²·day·MPa) or higher.

Incidentally, the oxygen permeability can also be set as an index representing whether or not the coating layer 1B is uniformly provided. That is, when the coating layer 1B is not uniformly provided such that there is application unevenness, pinholes, or the like, the value of the oxygen permeability tends to be high. Accordingly, by adjusting the oxygen permeability measured under the above-described conditions to be lower than 1.0 × 10⁵ mL/ (m²·day·MPa), the coating layer 1B can be appropriately formed, and oxygen barrier properties suitable for the packaging film can be obtained.

The oxygen permeability can be measured based on JIS K 7126.

### • Regarding Identification of Coating layer 1B (Material, Thickness, and the like)

The resins in the coating layer 1B can be determined, for example, by analyzing an infrared absorption spectrum of the coating layer 1B. In particular, in order to obtain the infrared absorption spectrum of a thin film such as the coating layer 1B, it is preferable to apply an attenuated total reflectance method (ATR method).

For example, in polyurethane, polyvinyl alcohol, and polyvinylidene chloride, absorption peaks are shown in the following wavenumber ranges, respectively. The resin in the coating layer 1B can be specified based on these absorption peaks.
- Polyurethane: 3300 ± 50 cm⁻¹, 1700 ± 50 cm⁻¹, and 1500 ± 50 cm⁻¹
- Polyvinyl alcohol: 1450 ± 50 cm⁻¹, 1350 ± 50 cm⁻¹, 1110 ± 50 cm⁻¹, and 900 ± 50 cm⁻¹
- Polyvinylidene chloride: 1500 ± 50 cm⁻¹ and 650 to 800 cm⁻¹

Of course, the material forming the coating layer 1B may be identified using a method other than the analysis of the infrared absorption spectrum.

The thickness of the coating layer 1B can be obtained, for example, using a well-known film thickness meter. Examples of the film thickness meter include F20 series (manufactured by Filmetrics Japan, Inc.).

### (Anchor Coat Layer)

The packaging film according to the present embodiment may include an anchor coat layer between the coating layer 1B and the substrate layer 1A. In other words, in the present embodiment, when the coating layer 1B is formed on one surface of the substrate layer 1A, the anchor coat layer may be provided in advance on the surface of the substrate layer 1A.

Due to the presence of the anchor coat layer, it is expected that the adhesive force between the coating layer 1B and the substrate layer 1A increases or the adhesive force is not likely to decrease over time (the adhesive force is stabilized). Of course, as long as the adhesive force or the stability is sufficient in practice, the anchor coat layer does not need to be provided.

Examples of a material for forming the anchor coat layer include an anchor coating agent including a urethane resin or a (meth) acrylic resin. As the anchor coating agent, a commercially available anchor coating agent can be appropriately used.

When the anchor coat layer is provided, the thickness thereof in terms of non-volatile components is typically 0.01 to 3 g/m², preferably 0.05 to 1 g/m², and more preferably 0.05 to 0.5 g/m².

### (Glass Transition Temperature, Melting Point, Magnitude Correlation, and the like of Respective Layers)

As described above, in the packaging film according to the present embodiment, when a glass transition temperature of the coating layer 1B is represented by Tgc and a glass transition temperature of the substrate layer 1A is represented by Tgs, a value of Tgc is preferably -25°C to 120°C.

Tgs is more preferably -25°C to 120°C, still more preferably -22°C to 115°C, and still more preferably -20°C to 110°C.

In addition, the value of Tgc - Tgs (the difference between Tgc and Tgs) is preferably 90°C to 245°C, more preferably 100°C to 240°C, and still more preferably 107°C to 235°C.

In addition, Tgs is typically -130°C to -120°C.

Tgc - Tgs is 90°C to 245°C, that is, the "difference" between the glass transition temperatures of the coating layer 1B and the substrate layer 1A is sufficiently large such that the above-described effect that "the butt-seam bag or the like having opening easiness can be obtained" can be more reliably obtained. In addition, Tgc is -25°C to 90°C such that the effect can be more reliably obtained under heat sealing conditions (temperature, time, and the like) that are typically applied during mass production.

The glass transition temperature can be obtained, for example, by differential scanning calorimetry (DSC) based on JIS K 7121. Of course, when two or more glass transition points are recognized in the DSC chart, a lower value is adopted as the glass transition temperature.

Incidentally, when the coating layer 1B has a melting point, the value thereof is, for example, 120°C to 245°C, preferably 120°C to 230°C, more preferably 130°C to 230°C, and still more preferably 135°C to 230°C.

In addition, the melting point of the substrate layer 1A is preferably 110°C to 133°C and more preferably 112°C to 131°C.

The melting point can be measured by differential scanning calorimetry (DSC) as in the glass transition temperature.

### (Supplement regarding Layer Configuration)

The packaging film according to the present embodiment has, for example, a two-layer configuration shown in Fig. 1 described above.

On the other hand, in another example, the packaging film according to the present embodiment may include an additional layer as long as it includes: the substrate layer 1A; and the coating layer 1B that is provided on one surface of the substrate layer 1A directly or through the anchor coat layer.

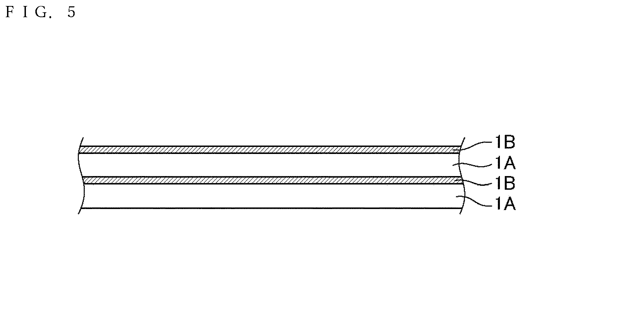

In still another example, the packaging film according to the present embodiment may include, for example, two or more substrate layers 1A and/or two or more coating layers 1B. Specifically, as shown in Fig. 5, a four-layer configuration of substrate layer 1A-coating layer 1B-substrate layer 1A-coating layer 1B may be adopted. It is obvious that, in the film having the four-layer configuration, the blocking resistance that is insufficient in the film consisting of only the polyethylene single layer is excellent. In addition, although the four-layer configuration is adopted, the number of materials to be used is small, which is preferable from the viewpoint of easy recycling.

In the packaging film having the four-layer configuration shown in Fig. 5, the two substrate layer 1A may include different polyethylenes (for example, polyethylenes having different molecular weights or different physical properties). Of course, the two substrate layers 1A may include the same polyethylene resin.

In the packaging film having the four-layer configuration shown in Fig. 5, the two coating layers 1B may be configured based on different raw materials. For example, among the two coating layers 1B, one coating layer 1B may include polyurethane, the other coating layer 1B may include polyvinylidene chloride. Of course, the two coating layers 1B may include the same resin.

### <Method of Manufacturing Packaging Film (Laminated Film)>

It is preferable that the packaging film according to the present embodiment, that is, a laminated film including a substrate layer that includes polyethylene and a coating layer that includes a resin and is provided on one surface side of the substrate layer directly or through an anchor coat layer is manufactured by applying an application liquid (a resin solution or a resin dispersion) to one surface of a polyethylene-containing film.

When the anchor coat layer is provided, first, an anchor coating agent is applied to one surface of the polyethylene-containing film, the applied anchor coating agent is cured to form an anchor coat layer, and subsequently the application liquid (the resin solution or the resin dispersion) is applied.

Although the manufacturing method is not particularly limited, for example, by adopting conditions of application or drying described below, a high-quality packaging film (laminated film) in which the occurrence of defects such as cracks is suppressed can be manufactured.

The application liquid may be aqueous or an organic solvent-based.

The application liquid includes, for example, one or more resins such as polyurethane, polyvinyl alcohol, or polyvinylidene chloride as non-volatile components and includes water and/or an organic solvent as volatile components.

When the application liquid includes an organic solvent, the organic solvent may be appropriately selected depending on the kind of the resin and the like. Examples of the organic solvent include: ketones such as acetone, methyl ethyl ketone, or cyclohexanone; ethers such as dioxane, diethyl ether, or tetrahydrofuran; aromatic hydrocarbons such as benzene, toluene, or xylene; esters such as ethyl acetate or butyl acetate; alcohols such as methanol, ethanol, or 2-propanol (isopropyl alcohol); amides such as dimethylformamide; and mixed solvents thereof.

Examples of an application liquid including polyurethane include lineups manufactured by Mitsui Chemicals, Inc. such as "TAKENATE", "TAKELAC", or "MT-OLESTER" (all of which are registered tradenames). These lineups include aqueous liquids (water dispersion type) and organic solvent-based liquids. Of course, an application liquid in which an appropriate polyurethane is dissolved/dispersed in water/organic solvent may be used instead of using a commercially available application liquid.

Examples of an application liquid including polyvinyl alcohol include an application liquid in which polyvinyl alcohol is dissolved/dispersed in water/organic solvent. Since the polyvinyl alcohol is typically hydrophilic, it is preferable that water is used. In this case, in order to provide the uniform coating layer 1B on the polyethylene-containing film, it may be preferable that water and the organic solvent are used in combination.

Examples of an aqueous application liquid including polyvinylidene chloride include a latex (emulsion) including fine particles of polyvinylidene chloride. Examples of a commercially available product include SARAN latex series manufactured by Asahi Kasei Corporation.

Examples of an organic solvent-based application liquid including polyvinylidene chloride include an application liquid in which polyvinylidene chloride is dissolved or dispersed in an organic solvent. Examples of the organic solvent that can be used are as described above.

From the viewpoint of environmental burden, it is preferable that the application liquid is aqueous. When the application liquid includes only water as a volatile solvent, it may be difficult to form the uniform coating layer 1B. In this case, an organic solvent may be added to the aqueous application liquid. Although the organic solvent that can be used at this time is not particularly limited, from the viewpoint of affinity with water, preferable examples include an alcohol-based solvent, specifically, monohydric alcohols such as methanol, ethanol, or 2-propanol (isopropyl alcohol) and polyhydric alcohols such as ethylene glycol or glycerin. It is preferable that the alcohol solvent includes an alcohol having 1 to 4 carbon atoms, and it is more preferable that the alcohol solvent includes 2-propanol.

When an organic solvent such as an alcohol solvent is added to an aqueous application liquid, the amount of the organic solvent is preferably 10 to 50 mass% with respect to all the volatile components (the total amount of water and the organic solvent).

For various purposes, the application liquid may include various addition components. Examples of the addition components include an adhesive resin, a silane coupling agent, and a surfactant.

In particular, in order to form the uniform coating layer 1B in which application unevenness, pinholes, or the like is suppressed, it is preferable that the amount of the surfactant is appropriately adjusted. The amount of the surfactant is preferably 0.8 to 7.5 mass%, more preferably 1.25 to 7.0 mass%, still more preferably 1.30 to 6.8 mass%, still more preferably 1.30 to 1.80 mass%, and most preferably 1.30 to 1.55 mass% with respect to the total amount of the non-volatile components in the application liquid.

In other words, after volatilizing the volatile components, preferably 0.8 to 7.5 mass% of the surfactant is present in the coating layer 1B.

Incidentally, the application liquid includes the surfactant such that the surface resistivity of the coating layer 1B is reduced. The surfactant present on the surface of the coating layer 1B may adsorb on water in air. Accordingly, the surface resistivity of the coating layer 1B can be set as an index representing the content of the surfactant in the layer.

Specifically, the surface resistivity of the coating layer 1B is, for example, 1 × 10¹² to 1 × 10¹⁵ Ω and preferably 1 × 10¹² to 1 × 10¹⁴ Ω.

The surface resistivity is measured based on, for example, JIS K 6911.

The non-volatile component concentration in the application liquid is preferably 2 to 15 mass% and more preferably 3 to 12 mass%. By appropriately adjusting the non-volatile component concentration, the coating layer 1B having an appropriate thickness can be easily formed.

The application amount is not particularly limited and is preferably appropriately adjusted in order to form the coating layer 1B having a desired thickness. For example, in order to obtain the relatively thin (about 0.3 to 2.0 µm) coating layer 1B, the application amount in terms of non-volatile component is preferably .3 to 4.5 g/m², more preferably 0.3 to 4.0 g/m², still more preferably 0.3 to 3.0 g/m², still more preferably 0.3 to 2.5 g/m², still more preferably 0.3 to 2.0 g/m², and most preferably 0.4 to 1.8 g/m².

The packaging film according to the present embodiment may be manufactured using a method including: (1) applying an application liquid including a monomer and/or a prepolymer to one surface of a polyethylene-containing film; and (2) causing the monomer and/or the prepolymer to react on the polyethylene-containing film.

A specific method of the application is not particularly limited, and a well-known method can be applied. Examples of the specific method include a method using a well-known device such as an air knife coater, a kiss roll coater, a metering bar coater, a gravure roll coater, a reverse roll coater, a dip coater, or a die coater.

A specific method of drying after the application is not particularly limited, and a well-known method can be applied. Examples of the specific method include a method of performing drying using a well-known device such as an arch dryer, a straight bath dryer, a tower dryer, a drum dryer, or a floating dryer.

In consideration of the heat resistance or the like of the substrate layer 1A, the drying temperature is 50°C to 95°C, preferably 55°C to 90°C, and more preferably 60°C to 85°C. The drying time is typically 5 seconds to 10 minutes (600 seconds), preferably 5 seconds to 3 minutes (180 seconds), more preferably 5 seconds to 2 minutes (120 seconds), and still more preferably 5 seconds to 1 minute (60 seconds).

After application and drying, an aging treatment may be further performed. It is presumed that, for example, the adhesive force between the substrate layer 1A and the coating layer 1B is strengthened through the aging treatment.

By leaving the dried film to stand at room temperature, the aging treatment can also be performed, and it is preferable to perform the aging treatment using an oven or the like.

From the viewpoint of preventing damages of the film caused by a reduction in treatment time and heating, the temperature of the aging treatment may be set in consideration of the heat resistance or melting point of the film substrate. The temperature of the aging treatment is preferably 30°C to 80°C, more preferably 30°C to 60°C, and still more preferably 30°C to 50°C.

The time of the aging treatment varies depending on temperature conditions and is preferably 6 to 168 hours, more preferably 12 to 120 hours, still more preferably 12 to 96 hours, and still more preferably 12 to 72 hours.

### <Use of Packaging Film/Package>

Specifically, the packaging film according to the present embodiment can be suitably used for: packaging films for packaging food products, drugs, or daily commodities; films for vacuum insulation panels; or sealing films for sealing electroluminescence elements, solar cells, or the like.

In addition, the packaging film according to the present embodiment can also be suitably used as a film forming a package. The package is, for example: a packaging pouch that is formed of the packaging film according to the present embodiment and is used for packaging an article; or a package in which an article is packaged with the packaging pouch. In addition, depending on uses, a part of the package may be formed of the packaging film according to the present embodiment, or substantially the entirety of the package may be formed of the packaging film according to the present embodiment.

The form of the package may be, for example, the above-described butt-seam bag or a standing pouch (pouch package). The butt-seam bag is preferable from the viewpoint of opening easiness or appearance as described above. The pouch package is preferable from the viewpoint of sufficiently securing the volume of the packaging pouch.

The article to be packaged is not particularly limited. Examples of the article include food products, drugs, and electronic components such as semiconductor elements or organic ELs.

Just to be sure, when the package (for example, a packaging pouch) is formed of the packaging film according to the present embodiment, in order to reliably obtain properties "preferable for manufacturing the butt-seam bag", it is preferable that the substrate layer 1A is present on the inner surface side and the coating layer 1B is present on the outer surface side.

Particular examples of the food products to be packaged include dried articles (articles that may have problem when absorbing moisture), for example, baked goods (for example, cookies or biscuits), rice goods such as rice crackers, baked mochi, cubic rice crackers, or puffed rice, vegetable chips, snack foods, seasoned powder for sprinkling over rice, or grain powder (for example, flour or rice flour) . It is preferable that food products (in particular, dried products as described above) are packaged using the packaging pouch formed of the packaging film according to the present embodiment.

A method of manufacturing the package from the packaging film is not particularly limited. A method such as heat sealing or fusing that is well-known in the field of the packaging film/the packaging pouch can be appropriately used.

Hereinafter, the embodiment of the present invention has been described. However, the embodiment is merely an example of the present invention, and various configurations other than the above-described configurations can be adopted. In addition, the present invention is not limited to the above-described embodiments, and modifications, improvements, and the like within a range where the object of the present invention can be achieved are included in the present invention.

A reference configuration of the present invention will be additionally described below.
1. A packaging film comprising:
   a substrate layer that includes polyethylene; and
   a coating layer that includes a resin different from polyethylene and is provided in contact with one surface of the substrate layer or is provided over one surface of the substrate layer through an anchor coat layer,
   in which a part or an entirety of the surface of the coating layer is an exposed surface, and
   a ten point average roughness SRz of the exposed surface obtained by three-dimensional surface measurement is 0.50 µm or more.
2. The packaging film according to 1.,
   in which a kurtosis SRku of the exposed surface obtained by three-dimensional surface measurement is 25 or higher.
3. The packaging film according to 1. or 2.,
   in which a thickness of the coating layer is 0.3 to 2.0 µm.
4. The packaging film according to any one of claims 1. to 3., in which a thickness of the substrate layer is 10 to 150 µm.
5. The packaging film according to any one of 1. to 4.,
   in which the resin different from the polyethylene is one or more resins selected from the group consisting of polyurethane, polyvinyl alcohol, and polyvinylidene chloride.
6. The packaging film according to any one of 1. to 5., in which an oxygen permeability measured under conditions of a temperature of 23 ± 2°C and a humidity of 90 ± 1.0% RH is lower than 1.0 × 10⁵ mL/ (m²·day·MPa) and/or an oxygen permeability measured under conditions of a temperature of 23 ± 2°C and a humidity of 50 ± 1.0% RH is lower than 1.0 × 10⁵ mL/(m²·day·MPa).
7. The packaging film according to any one of 1. to 6.,
   in which the glass transition temperature of the substrate layer is -130°C to -120°C.
8. The packaging film according to any one of 1. to 7.,
   in which the coating layer does not have a melting point or has a melting point of 120°C to 245°C.
9. The packaging film according to any one of 1. to 8.,
   in which the coating layer includes a surfactant, and
   a proportion of the surfactant in the coating layer is 0.8 to 7.5 mass%.
10. A package that is formed of the packaging film according to any one of 1. to 9..
11. The package according to 10.,
   in which the coating layer is present on an outer surface.

Another reference configuration of the present invention will be additionally described below.
1. A packaging film comprising:
   a substrate layer that includes polyethylene; and
   a coating layer that includes a resin different from polyethylene and is provided in contact with one surface of the substrate layer or is provided over one surface of the substrate layer through an anchor coat layer,
   a part or an entirety of the surface of the coating layer is an exposed surface, and
   a thickness of the coating layer is 0.3 to 4.5 µm.
2. The packaging film according to 1.,
   in which a thickness of the substrate layer is 10 to 150 µm.
3. The packaging film according to 1. or 2.,
   in which a ten point average roughness SRz of the exposed surface obtained by three-dimensional surface measurement is 0.50 µm or more .
4. The packaging film according to any one of claims 1. to 3., in which a kurtosis Sku of the exposed surface obtained by three-dimensional surface measurement is 25 or higher.
5. The packaging film according to any one of 1. to 4.,
   in which the resin different from the polyethylene is one or more resins selected from the group consisting of polyurethane, polyvinyl alcohol, and polyvinylidene chloride.
6. The packaging film according to any one of 1. to 5.,
   in which an oxygen permeability measured under conditions of a temperature of 23 ± 2°C and a humidity of 90 ± 1.0% RH is lower than 1.0 × 10⁵ mL/ (m²·day·MPa) and/or an oxygen permeability measured under conditions of a temperature of 23 ± 2°C and a humidity of 50 ± 1.0% RH is lower than 1.0 × 10⁵ mL/(m²·day·MPa).
7. The packaging film according to any one of 1. to 6.,
   in which when a glass transition temperature of the coating layer is represented by Tgc and a glass transition temperature of the substrate layer is represented by Tgs, a value of Tgc is -25°C to 120°C and a value of Tgc - Tgs is 90°C to 245°C.
8. The packaging film according to any one of 1. to 7.,
   in which the coating layer does not have a melting point or has a melting point of 120°C to 245°C.
9. The packaging film according to any one of 1. to 8.,
   in which a static friction coefficient between the surfaces of the substrate layers is 0.08 to 2.50.
10. The packaging film according to any one of 1. to 9.,
   in which the coating layer includes a surfactant, and
   a surface resistivity of the coating layer is 1 × 10¹² to 1 × 10¹⁵ Ω.
11. The packaging film according to any one of 1. to 10., in which the coating layer includes a surfactant, and
   a proportion of the surfactant in the coating layer is 0.8 to 7.5 mass%.
12. A package that is formed of the packaging film according to any one of 1. to 11..
13. The package according to 12.,
   in which the coating layer is present on an outer surface.

Still another reference configuration of the present invention will be additionally described below.
1. A packaging film comprising:
   a substrate layer that includes polyethylene; and
   a coating layer that includes one or more resins selected from the group consisting of polyurethane, polyvinyl alcohol, and polyvinylidene chloride and is provided in contact with one surface of the substrate layer or is provided over one surface of the substrate layer through an anchor coat layer,
   in which a thickness of the coating layer is less than a thickness of the substrate layer.
2. The packaging film according to 1.,
   in which a thickness of the coating layer is 0.3 to 2.0 µm.
3. The packaging film according to 1. or 2.,
   in which a thickness of the substrate layer is 10 to 150 µm.
4. The packaging film according to any one of 1. to 3.,
   in which an oxygen permeability measured under conditions of a temperature of 23 ± 2°C and a humidity of 90 ± 1.0% RH is lower than 1.0 × 10⁵ mL/ (m²·day·MPa) and/or an oxygen permeability measured under conditions of a temperature of 23 ± 2°C and a humidity of 50 ± 1.0% RH is lower than 1.0 × 10⁵ mL/(m²·day·MPa).
5. The packaging film according to any one of 1. to 4.,
   in which when a glass transition temperature of the coating layer is represented by Tgc and a glass transition temperature of the substrate layer is represented by Tgs, a value of Tgc is -25°C to 120°C and a value of Tgc - Tgs is 90°C to 245°C.
6. The packaging film according to 5,
   in which Tgs is -130°C to -120°C.
7. The packaging film according to any one of 1. to 6.,
   in which the coating layer does not have a melting point or has a melting point of 120°C to 230°C.
8. The packaging film according to any one of 1. to 7.,
   in which the coating layer is present on an outermost surface of the packaging film, and
   a ten point average roughness SRz of the surface of the coating layer obtained by three-dimensional measurement is 0.50 µm or more.
9. The packaging film according to any one of 1. to 8.,
   in which the coating layer is present on an outermost surface of the packaging film, and
   a kurtosis SRku of the surface of the coating layer obtained by three-dimensional measurement is 25 or higher.
10. The packaging film according to any one of 1. to 9.,
   in which a static friction coefficient between the surfaces of the substrate layers is 0.08 to 2.50.
11. The packaging film according to any one of 1. to 10., in which a surface resistivity of the coating layer is 1 × 10¹² to 1 × 10¹⁵ Ω.
12. The packaging film according to any one of 1. to 11., in which the coating layer includes a surfactant, and
   a proportion of the surfactant in the coating layer is 0.8 to 7.5 mass%.
13. A package that is formed of the packaging film according to any one of 1. to 12..
14. The package according to 13.,
   in which the coating layer is present on an outer surface.

### [Examples]

The embodiments of the present invention will be described in more detail based on Examples and Comparative Examples. Just to be sure, the present invention is not limited to only Examples.

Hereinafter, an index may be represented by "E". For example, 1.1E - 06 represents 1.1 × 10⁻⁶.

<Preparation of Materials>

The following materials were prepared.

In the following description, "L-SMART", "T. U. X.", and "TAKELAC"are registered tradenames.

### (Polyethylene-Containing Film for Forming Substrate Layer>

- C-1
   Manufactured by Mitsui Chemicals Tohcello, Inc., L-SMART C-1 (thickness: 40 µm)
- C-1a (Thickness: 40 µm)
   A film in which the amount of the slipping agent in C-1 was reduced
- FC-S
   Manufactured by Mitsui Chemicals Tohcello, Inc., T. U. X. FC-S (thickness: 50 µm)
- HZ
   Manufactured by Mitsui Chemicals Tohcello, Inc., T. U. X. HZ (thickness: 50 µm)
- HZR-2
   Manufactured by Mitsui Chemicals Tohcello, Inc., T. U. X. HZR-2 (thickness: 50 µm)

The thickness, melting point, SRz, SRku, surface resistivity, and dynamic friction coefficient of each of the films are as shown in Tables below. The values of SRz and SRku are values of the corona-treated surface side of each of the films.

### (Application Liquid for Forming Anchor Coat Layer)

An application liquid obtained by mixing TAKELAC A-310 (manufactured by Mitsui Chemicals Tohcello, Inc.), TAKENATE A-3 (manufactured by Mitsui Chemicals Tohcello, Inc.), and ethyl acetate such that the amounts thereof were 5.3 mass%, 0.1 mass%, and 94.6 mass%, respectively.

### (Application Liquid for forming Coating Layer)

### • PU

An application liquid obtained by adding 2-propanol to TAKELAC WPB-341 (aqueous dispersion including a polyurethane resin, manufactured by Mitsui Chemicals, Inc.) such that the mass ratios of water and 2-propanol were the same.

### • PVA

An application liquid prepared by mixing OVAL 105 MC (manufactured by Kuraray Co., Ltd.) and water at a mass ratio of 10:90.

### • PVDC

An organic solvent-based application liquid including polyvinylidene chloride manufactured by Mitsui Chemicals MC Co., Ltd. (polyvinylidene chloride was SARAN Resin F216 manufactured by Asahi Kasei Corporation)

The non-volatile component concentrations of the respective application liquids were set as follows: PU: 9 mass%, PVA: 10 mass%, and PVDC: 5 mass%.

### <Manufacturing of Packaging Film (Formation of Coating layer)>

In order to provide the anchor coat layer between the substrate layer and the coating layer, using a meyer bar (number #3), the application liquid for forming the anchor coat layer was applied to the surface (corona-treated surface side) of the polyethylene-containing film in an amount of 0.2 g/m² (in terms of non-volatile components) . The application liquid was left to stand under conditions of 100°C for 15 seconds and dried to form the anchor coat layer.

Using a meyer bar, an application liquid for forming the coating layer was applied to the corona-treated surface of the prepared polyethylene-containing film or, when the anchor coat layer was provided, to the surface of the anchor coat layer. Regarding the meyer bar, when the application liquid was PU or PVA, #9 was used, and when the application liquid was PVDC, #18 was used. The application amount was adjusted to be the amount (g/m²) shown in the tables below.

Combinations of the polyethylene-containing films and the application liquids are as shown in the tables below.

After the application, a drying treatment using hot air was performed. When the application liquid was PU or PVDC, the temperature of the hot air was 100°C and the time was 15 seconds. When the application liquid was PVA, the temperature of the hot air was 70°C and the time was 15 seconds. The temperature of the hot air refers to the ambient temperature.

After the drying treatment, when the application liquid was PU or PVA, an aging treatment was performed at 40°C for 24 hours, and when the application liquid was PVDC, an aging treatment was performed at 40°C for 48 hours.

As a result, the packaging film was manufactured.

### <Measurement of Various Numerical Values>

### (Glass transition temperatures (Tgs, Tgc) and Melting Point (Tm))

3.0 mg of a portion of the coating layer and 3.0 mg of a portion of the substrate layer were collected from the packaging film as samples for measurement. Each of the samples was measured by DSC to obtain the glass transition temperature and the melting point. The details of the DSC measurement are as follows.
- Measurement Temperature Steps: (i) holding at -50°C for 10 minutes → (ii) increasing the temperature and holding at 250°C for 10 minutes → (iii) decreasing the temperature and holding at -50°C for 10 minutes → (iv) increasing the temperature up to 250°C
- Temperature increase rate and temperature decrease rate between the steps (i) to (iv) 5 °C/min
- Measurement atmosphere: nitrogen gas

The glass transition temperature and the melting point were obtained based on a DSC curve obtained during the temperature increase (2nd run) between (iii) and (iv) described above.

Regarding the glass transition temperature, an extrapolated glass transition start temperature was adopted.

Regarding the melting point, a peak top temperature of a melting peak was adopted.

### (SRz and SRku)

The three-dimensional surface qualities of the surface of the coating layer and the corona-treated surface (before the formation of the coating layer) of the polyethylene-containing film were measured using a three-dimensional surface roughness measuring instrument SE-3500 (manufactured by Kosaka Laboratory Ltd.). Specific conditions (for example, device settings) of the measurement are as follows. The data obtained by the measurement was analyzed by software to obtain SRz and SRku.

- Measurement length: MD direction: 400 µm, TD direction: 1000 µm
- Number of times of measurements: number of lines in TD direction: 201
- Measurement pitch: MD direction: 0.5 µm, TD direction: 2 µm
- Z measurement magnification: 5000
- X feed rate: 0.2 mm/s
- Low range cut: 0.25 mm
- High range cut: R + W
- Leveling: least-square method
- Z origin: 0 point alignment using a least-square method
- Stylus tip curvature radius: 2.0 µm/60°C
- Measurement direction: stylus movement parallel to MD direction
- Analysis software: "three-dimensional surface roughness analysis program built in device"

### (Static Friction Coefficient of Substrate Layer)

The measurement was performed according to the following procedure.
(1) Two polyethylene-containing films (hereinafter, referred to as films 1 and 2") cut in a size of 50 mm × 75 mm were prepared.
(2) The film 1 was fixed to a plate (hereinafter, referred to as "tilt plate") capable of freely adjusting the tilt angle.
(3) The film 2 was fixed to a rectangular member (the size of the bottom surface was 41 mm × 26 mm) in which the bottom surface was formed of brass. A weight was attached to the member such that the mass applied to the film 2 was 150 g.
(4) The film 2 was laminated on the film 1.
(5) The tilt plate was slowly tilted from 0° at a rate of 1 °/sec. The static friction coefficient was obtained from an angle θ measured when the upper film 2 started to slip (static friction coefficient = tanθ).

A corona treatment was performed on one surface of the polyethylene-containing film used at this time. Accordingly, the static friction coefficient was measured using three combinations of non-corona-treated surfaces, a non-corona-treated surface and a corona-treated surface, and corona-treated surfaces. (as described above, the application liquid was applied to the corona-treated surface).

### (Surface Resistivity)

The packaging film was stored in an environment of a temperature of 23°C and a humidity of 50% RH for 24 hours. Next, the surface resistivity was measured using a digital ultra-high resistance/micro current meter (R8340A) and a resistivity chamber (R12704) manufactured by Advantest Corporation. Measurement conditions were set as follows: an applied voltage of 560 V, an application time of 30 seconds, a temperature of 23°C, and a humidity of 50% RH.

### (Thickness of Coating layer)

The thickness of the coating layer was measured using a flm thickness meter F20-UVmanufactured by Filmetrics Japan, Inc. (light source: halogen, measurement spot diameter: 1.5 mm).

This time, the thickness of one sample was measured at three positions. The average value of the thickness values at the three positions was set as the thickness of the coating layer.

### (Application Amount (in terms of Non-Volatile Components))

### • When Application Liquid was PU

Using dimethylformamide (DMF), the coating layer provided in the packaging film was wiped off. The application amount (in terms of non-volatile components) was calculated from a mass change before and after the wipe-off.

### • When Application Liquid was PVA

The packaging film was dipped in boiling water to melt the coating layer provided in the packaging film. The application amount (in terms of non-volatile components) was calculated from a mass change before and after the dipping.

### • When Application Liquid was PVDC

The application amount was calculated based on the intensity of a peak derived from Cl obtained by fluorescent X-ray analysis. At this time, a calibration curve obtained using a material having a known Cl content was used.

The above-described various information are shown in Tables 1 and 2. Table 1 collectively shows the information regarding the substrate layer. Table 2 collectively shows the information regarding the coating layer and the entire film. In addition, Table 2 also shows whether or not the anchor coat layer was provided.

All the films according to Comparative Examples do not include the coating layer. Therefore, Table 2 has no items relating to the films according to Comparative Examples.

In Tables 1 and 2, "-" in the column of surface resistivity represents that the surface resistivity was not measured.

In Table 2, "-" in the column of surfactant proportion represents that the application liquid did not include the surfactant.

In Table 2, "-" in the column of melting point Tm represents that no peak corresponding to the melting point was observed in the DSC measurement.

[Table 1]

**[Table 1]**

| | Substrate Layer | | | | | | | | | |
|---|---|---|---|---|---|---|---|---|---|---|
| | Substrate Film | Thickness | Glass Transition Temperature Tgs | Melting Point Tm | SRz | SRku | Surface Resistivity | Static Friction Coefficient | | |
| | | | | | | | | Non-Corona-Treated Surfaces | Corona-Treated Surface-Non-Corona-Treated Surface | Corona-Treated Surfaces |
| | | [µm] | [°C] | [°C] | [µm] | [-] | [Ω] | [-] | [-] | [-] |
| Example 1 | C-1 | 40 | -125 | 126 | 1.96 | 125 | 2.0E + 17 | 0.15 | 0.13 | 0.14 |
| Example 2 | C-1 | 40 | -125 | 126 | 1.96 | 125 | 2.0E + 17 | 0.15 | 0.13 | 0.14 |
| Example 3 | C-la | 40 | -125 | 126 | 2.45 | 276 | 1.8E + 16 | 0.42 | 0.34 | 0.64 |
| Example 4 | C-la | 40 | -125 | 126 | 2.45 | 276 | 1.8E + 16 | 0.42 | 0.34 | 0.64 |
| Example 5 | C-la | 40 | -125 | 126 | 2.45 | 276 | 1.8E + 16 | 0.42 | 0.34 | 0.64 |
| Example 6 | C-la | 40 | -125 | 126 | 2.45 | 276 | 1.8E + 16 | 0.42 | 0.34 | 0.64 |
| Example 7 | C-la | 40 | -125 | 126 | 2.45 | 276 | 1.8E + 16 | 0.42 | 0.34 | 0.64 |
| Example 8 | C-la | 40 | -125 | 126 | 2.45 | 276 | 1.8E + 16 | 0.42 | 0.34 | 0.64 |
| Example 9 | FC-S | 50 | -125 | 113 | 2.09 | 144 | 9.4E + 15 | 0.11 | 0.13 | 0.23 |
| Example 10 | FC-S | 50 | -125 | 113 | 2.09 | 144 | 9.4E + 15 | 0.11 | 0.13 | 0.23 |
| Example 11 | FC-S | 50 | -125 | 113 | 2.09 | 144 | 9.4E + 15 | 0.11 | 0.13 | 0.23 |
| Example 12 | HZ | 50 | -125 | 124 | 2.36 | 153 | 6.2E + 15 | 1.25 | 0.57 | 0.55 |
| Example 13 | HZ | 50 | -125 | 124 | 2.36 | 153 | 6.2E + 15 | 1.25 | 0.57 | 0.55 |
| Example 14 | HZ | 50 | -125 | 124 | 2.36 | 153 | 6.2E + 15 | 1.25 | 0.57 | 0.55 |
| Example 15 | HZR-2 | 50 | -125 | 130 | 2.96 | 224 | 3.7E + 15 | 0.29 | 0.37 | 0.49 |
| Example 16 | HZR-2 | 50 | -125 | 130 | 2.96 | 224 | 3.7E + 15 | 0.29 | 0.37 | 0.49 |
| Example 17 | HZR-2 | 50 | -125 | 130 | 2.96 | 224 | 3.7E + 15 | 0.29 | 0.37 | 0.49 |
| Example 18 | C-la | 40 | -125 | 126 | 2.45 | 276 | 1.8E + 16 | 0.42 | 0.34 | 0.64 |
| Example 19 | C-la | 40 | -125 | 126 | 2.45 | 276 | 1.8E + 16 | 0.42 | 0.34 | 0.64 |
| Example 20 | C-la | 40 | -125 | 126 | 2.45 | 276 | 1.8E + 16 | 0.42 | 0.34 | 0.64 |
| Comparative Example 1 | C-1 | 40 | -125 | 126 | 1.96 | 125 | 2.0E + 17 | 0.15 | 0.13 | 0.14 |
| Comparative Example 2 | C-la | 40 | -125 | 126 | 2.45 | 276 | 1.8E + 16 | 0.42 | 0.34 | 0.64 |
| Comparative Example 3 | FC-S | 50 | -125 | 113 | 2.09 | 144 | 9.4E + 15 | 0.11 | 0.13 | 0.23 |
| Comparative Example 4 | HZ | 50 | -125 | 124 | 2.36 | 153 | 6.2E + 15 | 1.25 | 0.57 | 0.55 |
| Comparative Example 5 | HZR-2 | 50 | -125 | 130 | 2.96 | 224 | 3.7E + 15 | 0.29 | 0.37 | 0.49 |

[Table 2]

**[Table 2]**

| | Anchor Coat Layer | Coating Layer | | | | | | | | | Entire Film | |
|---|---|---|---|---|---|---|---|---|---|---|---|---|
| | | Application Liquid | Surfactant Proportion | Surface Resistivity | Glass Transition Temperature Tgc | Melting Point Tm | Application Amount (in terms of Non-Volatile Components) | Thickness | SRz | SRku | Difference between Tg of Two Layers | Difference between Tm of Two Layers |
| | | | [% by mass] | [Ω] | [°C] | [°C] | [g/m²] | [µm] | [µm] | [-] | [°C] | [°C] |
| Example 1 | Not Provided | PU | - | - | 107 | - | 1.0 | 1.2 | 1.67 | 33 | 232 | - |
| Example 2 | Not Provided | PVA | 1.5 | 1.2E + 14 | 78 | 218 | 0.9 | 0.9 | 1.64 | 99 | 203 | 92 |
| Example 3 | Not Provided | PU | - | - | 107 | - | 0.5 | 0.5 | 1.32 | 201 | 232 | - |
| Example 4 | Not Provided | PU | - | 4.5E + 15 | 107 | - | 1.5 | 1.7 | 1.49 | 240 | 232 | - |
| Example 5 | Not Provided | PU | - | - | 107 | - | 2.4 | 2.7 | 1.66 | 229 | 232 | - |
| Example 6 | Not Provided | PU | - | - | 107 | - | 3.8 | 4.3 | 0.62 | 75 | 232 | - |
| Example 7 | Not Provided | PVA | 1.4 | 1.1E + 14 | 78 | 218 | 0.9 | 0.9 | 1.38 | 130 | 203 | 92 |
| Example 8 | Not Provided | PVDC | - | 6.4E + 15 | -19 | 140 | 1.1 | 1.2 | 2.44 | 115 | 106 | 14 |
| Example 9 | Not Provided | PU | - | - | 107 | - | 1.0 | 1.1 | 2.26 | 191 | 232 | - |
| Example 10 | Not Provided | PVA | 1.5 | 6.5E + 13 | 78 | 218 | 0.6 | 0.7 | 1.59 | 91 | 203 | 92 |
| Example 11 | Not Provided | PVDC | - | - | -19 | 140 | 1.0 | 1.1 | 2.13 | 122 | 106 | 14 |
| Example 12 | Not Provided | PU | - | - | 107 | - | 1.0 | 1.1 | 1.62 | 180 | 232 | - |
| Example 13 | Not Provided | PVA | 1.4 | 1.9E + 14 | 78 | 218 | 1.4 | 1.4 | 1.49 | 125 | 203 | 92 |
| Example 14 | Not Provided | PVDC | - | - | -19 | 140 | 1.1 | 1.2 | 2.42 | 158 | 106 | 14 |
| Example 15 | Not Provided | PU | - | - | 107 | - | 1.1 | 1.2 | 1.89 | 261 | 232 | - |
| Example 16 | Not Provided | PVA | 1.4 | 1.3E + 14 | 78 | 218 | 1.4 | 1.4 | 1.68 | 239 | 203 | 92 |
| Example 17 | Not Provided | PVDC | - | - | -19 | 140 | 1.1 | 1.2 | 2.23 | 234 | 106 | 14 |
| Example 18 | Provided | PU | - | 5.7E + 15 | 107 | - | 1.5 | 1.7 | 1.10 | 157 | 232 | - |
| Example 19 | Provided | PVA | 1.5 | 5.4E + 13 | 78 | 218 | 0.6 | 0.7 | 1.12 | 212 | 203 | 92 |
| Example 20 | Provided | PVDC | - | 7.1E + 15 | -19 | 140 | 1.1 | 1.2 | 2.31 | 235 | 106 | 14 |

### <Performance Evaluation>

### (Blocking Resistance)

The evaluation was performed according to the following procedure.
(1) Two films were prepared for each of Examples and Comparative Examples.
(2) (i) The two films according to each of Examples were laminated such that the surface of the coating layer was in contact with the surface of the coating layer. Alternatively, (ii) the two samples according to each of Comparative Examples were laminated such that the corona-treated surface was in contact with the corona-treated surface. At this time, the MD/TD directions of the two samples were matched to each other.
(3) The laminated two samples were heated using a seal iron under conditions of a temperature of 70°C, a pressure of 2.0 kgf, a sealing time of 60 seconds, and a seal width of 10 mm. As a result, a sample in which the two samples were intentionally blocked was obtained.
(4) After completion of heating, the sample was naturally cooled at room temperature.
(5) Both front and back surfaces of the sample were bonded with a commercially available adhesive tape for reinforcement (The reason for this is that, when the blocking strength is excessively strong, the measurement sample was stretched in a tensile test of the following (6) such that an accurate blocking strength cannot be measured).
(6) The sample cooled at room temperature was set in a tensile tester and was stretched in the MD direction of the substrate film at a tension rate of 5 mm/min. A load was recorded until the sample was separated into the individual layers.

In the column of "BL Resistance Strength" in the following tables, the maximum value of the recorded load was shown. As the value decreases, the blocking resistance increases.

### (Manufacturing Suitability of Butt-Seam Bag: Evaluation of Heat Fusion Properties of Back Surface Heat-Sealed Portion)

Hereinbelow, by evaluating the difficulty of heat fusion of the coating layers under typical heat sealing conditions, "Heat Fusion Properties of Back Surface Heat-Sealed Portion" during the manufacturing of the butt-seam bag were evaluated. A specific evaluation procedure is as follows.

(1) Two samples were prepared for each of the films according to Examples and Comparative Examples.
(2) (i) The two samples according to each of Examples were laminated such that the surfaces of the coating layers were in contact with each other. Alternatively, (ii) the two samples according to each of Comparative Examples were laminated such that the corona-treated surfaces of the films to be used for the substrate layer were in contact with each other. At this time, the MD/TD directions of the two samples were matched to each other.
(3) The laminated two samples were heated using a seal iron under conditions of a temperature of 140°C, a pressure of 1.5 kgf, a sealing time of 1.0 second, and a seal width of 10 mm.
(4) After completion of heating, the sample was naturally cooled at room temperature.

The state of the sample cooled at room temperature and the easiness of the separation of the two samples were evaluated based on the following three grades.

A (excellent): heat fusion between the two samples was not observed.

B (Good): Heat fusion between the two samples was slightly observed, but the two samples were able to be separated by hands.

C: (Bad): The two samples were clearly fused with each other. When the two samples were attempted to be separated, the substrate layer was stretched.

Incidentally, in (i) of (2) described above, the same procedure as (1) to (4) described above was performed, except that the two samples according to each of Examples were laminated such that the surfaces of the films to be used for the substrate layer were in contact with each other. As a result, in all the Examples, polyethylene melted sufficiently, and a heat-sealed portion was able to be formed.

### (Oxygen Permeability)

Using a device OX-TRAN 2/21 (manufactured by Mocon Inc.) the oxygen permeability of the packaging film was measured according to JIS K 7126 under (i) conditions of a temperature of 23 ± 2°C and a humidity of 90 ± 1.0% RH or under (ii) conditions of a temperature of 23 ± 2°C and a humidity of 50 ± 1.0% RH.

In the measurement, when the coating layer included polyurethane, an aluminum mask was used and the measurement area was set as 1/10 or 1/50 to measure the oxygen permeability. Next, the value (raw data) of the obtained oxygen permeability was amplified by 10 times or 50 times to obtain the oxygen permeability. The reason for this is that, since polyurethane is more likely to allow transmission of oxygen than polyvinyl alcohol or polyvinylidene chloride, the appropriate measurement cannot be performed when the oxygen permeability is measured without using a mask.

The performance evaluation results and the like are collectively shown in the following table.

Regarding the oxygen permeability in the performance evaluations, the table shows only either of the value measured under the conditions of a temperature of 23 ± 2°C and a humidity of 90 ± 1.0% RH or the value measured under the conditions of a temperature of 23 ± 2°C and a humidity of 50 ± 1.0% RH.

[Table 3]

**[Table 3]**

| | Evaluation Result | | | |
|---|---|---|---|---|
| | BL Resistance Strength | Manufacturing Suitability of Butt-Seam Bag | Oxygen Permeability | |
| | | | 23°C /90%RH | 23°C /50%RH |
| | [N] | [-] | [mL/ (m²·day·MPa)] | |
| Example 1 | 8 | B | 5.4E + 02 | - |
| Example 2 | 5 | A | - | 2.3E + 01 |
| Example 3 | 18 | B | 4.3E + 04 | - |
| Example 4 | 6 | B | 2.5E + 04 | - |
| Example 5 | 67 | B | 8.7E + 03 | - |
| Example 6 | 69 | B | 2.4E + 03 | - |
| Example 7 | 7 | A | - | 1.1E + 01 |
| Example 8 | 30 | B | - | 9.5E + 01 |
| Example 9 | 7 | B | 4.9E + 03 | - |
| Example 10 | 5 | A | - | 1.2E + 02 |
| Example 11 | 38 | B | - | 1.2E + 02 |
| Example 12 | 15 | B | 4.2E + 03 | - |
| Example 13 | 9 | A | - | 1.2E + 01 |
| Example 14 | 26 | B | - | 3.1E + 02 |
| Example 15 | 47 | B | 9.5E + 03 | - |
| Example 16 | 9 | A | - | 1.5E + 01 |
| Example 17 | 36 | B | - | 9.5E + 01 |
| Example 18 | 16 | B | 3.7E + 02 | - |
| Example 19 | 10 | B | - | 1.1E + 00 |
| Example 20 | 13 | B | - | 2.7E + 01 |
| Comparative Example 1 | 14 | C | 1.0E + 05 | - |
| Comparative Example 2 | 72 | C | 1.0E + 05 | - |
| Comparative Example 3 | 53 | C | 5.7E + 04 | - |
| Comparative Example 4 | 43 | C | 7.4E + 04 | - |
| Comparative Example 5 | 59 | C | 4.1E + 04 | - |

In each of Examples, by providing the appropriate coating layer on one surface of the substrate layer, the blocking resistance was further improved as compared to the polyethylene "single-layer" film. For example, the blocking resistance strength of each of the films according to Examples 3 to 8 where the coating layer was provided on one surface of the substrate film C-1a was lower than the blocking resistance strength of Comparative Example 2 (only the substrate film C-la).

In addition, in each of Examples, by providing the appropriate coating layer on one surface of the substrate layer, the manufacturing suitability of the high-quality butt-seam bag or the like was able to be obtained.

Further, in each of Examples, by providing the appropriate coating layer on one surface of the substrate layer, the oxygen permeability was able to be reduced (refer to Examples and Comparative Examples in which the same substrate layer was used).

When Examples are analyzed in more detail, for example, the following can be seen.

In Examples 3 to 6, the substrate films and the application liquids were the same, and the thicknesses of the coating layers were different from each other. In Examples 5 and 6 where the thickness of the coating layer was relatively large, the blocking resistance strength was relatively high. On the other hand, in Examples 3 and 4 where the thickness of the coating layer was relatively small, the blocking resistance strength was relatively low.

In a common sense, it is determined that, as the coating layer becomes thicker, the blocking resistance strength decreases. However, in Examples 3 to 6, when the coating layer was "appropriately thin", the blocking resistance strength was low (that is, the blocking resistance was improved).

The present application claims priority based on Japanese Patent Application No. 2019-102559, Japanese Patent Application No. 2019-102645, Japanese Patent Application No. 2019-102565, Japanese Patent Application No. 2019-102614, and Japanese Patent Application No. 2019-102681, filed on May 31, 2019, the entire contents of which are incorporated herein by reference.

### REFERENCE SIGNS LIST

- 1:: film
- 1A:: substrate layer
- 1B:: coating layer
- 10:: back surface heat-sealed portion
- 15:: bottom surface heat-sealed portion

## Claims

1. A packaging film comprising:
a substrate layer that includes polyethylene; and
a coating layer that includes a resin and is provided in contact with one surface of the substrate layer or is provided over one surface of the substrate layer through an anchor coat layer,
wherein when a glass transition temperature of the coating layer is represented by Tgc and a glass transition temperature of the substrate layer is represented by Tgs, a value of Tgc is -25°C to 120°C and a value of Tgc - Tgs is 90°C to 245°C.

2. A packaging film comprising:
a substrate layer that includes polyethylene; and
a coating layer that includes a resin different from polyethylene and is provided in contact with one surface of the substrate layer or is provided over one surface of the substrate layer through an anchor coat layer,
wherein a part or an entirety of the surface of the coating layer is an exposed surface, and
a ten point average roughness SRz of the exposed surface obtained by three-dimensional surface measurement is 0.50 µm or more.

3. A packaging film comprising:
a substrate layer that includes polyethylene; and
a coating layer that includes a resin different from polyethylene and is provided in contact with one surface of the substrate layer or is provided over one surface of the substrate layer through an anchor coat layer,
wherein a part or an entirety of the surface of the coating layer is an exposed surface, and
a thickness of the coating layer is 0.3 to 4.5 µm.

4. A packaging film comprising:
a substrate layer that includes polyethylene; and
a coating layer that includes one or more resins selected from the group consisting of polyurethane, polyvinyl alcohol and polyvinylidene chloride and is provided in contact with one surface of the substrate layer or is provided over one surface of the substrate layer through an anchor coat layer,
wherein a thickness of the coating layer is less than a thickness of the substrate layer.

5. The packaging film according to any one of claims 1 to 4,
wherein a thickness of the coating layer is 0.3 to 2.0 µm.

6. The packaging film according to any one of claims 1 to 5,
wherein a thickness of the substrate layer is 10 to 150 µm.

7. The packaging film according to any one of claims 1 to 3,
wherein the coating layer includes one or more resins selected from the group consisting of polyurethane, polyvinyl alcohol, and polyvinylidene chloride.

8. The packaging film according to any one of claims 1 to 7,
wherein an oxygen permeability measured under conditions of a temperature of 23 ± 2°C and a humidity of 90 ± 1.0% RH is lower than 1.0 × 10⁵ mL/ (m²·day·MPa) and/or an oxygen permeability measured under conditions of a temperature of 23 ± 2°C and a humidity of 50 ± 1.0% RH is lower than 1.0 × 10⁵ mL/(m²·day·MPa).

9. The packaging film according to any one of claims 1 to 8,
wherein the glass transition temperature Tgs of the substrate layer is -130°C to -120°C.

10. The packaging film according to any one of claims 1 to 9,
wherein the coating layer does not have a melting point or has a melting point of 120°C to 230°C.

11. The packaging film according to claim 1, 3, or 4,
wherein the coating layer is present on an outermost surface of the packaging film, and
a ten point average roughness SRz of the surface of the coating layer obtained by three-dimensional measurement is 0.50 µm or more.

12. The packaging film according to any one of claims 1 to 11,
wherein the coating layer is present on an outermost surface of the packaging film, and
a kurtosis SRku of the surface of the coating layer obtained by three-dimensional measurement is 25 or higher.

13. The packaging film according to any one of claims 1 to 12,
wherein a static friction coefficient between the surfaces of the substrate layers is 0.08 to 2.50.

14. The packaging film according to any one of claims 1 to 13,
wherein a surface resistivity of the coating layer is 1 × 10¹² to 1 × 10¹⁵ Ω.

15. The packaging film according to any one of claims 1 to 14,
wherein the coating layer includes a surfactant, and
a proportion of the surfactant in the coating layer is 0.8 to 7.5 mass%.

16. A package that is formed of the packaging film according to any one of claims 1 to 15.

17. The package according to claim 16,
wherein the coating layer is present on an outer surface.

18. A method of manufacturing a laminated film including a substrate layer that includes polyethylene and a coating layer that includes a resin and is provided on one surface side of the substrate layer directly or through an anchor coat layer, the method comprising:
an application step of applying an application liquid including at least a resin and water to the surface side of the substrate layer; and
a drying step of heating the applied application liquid in an atmosphere of 60°C to 100°C.

19. The method of manufacturing a laminated film according to claim 18,
wherein the resin includes one or more resins selected from the group consisting of polyurethane, polyvinyl alcohol, and polyvinylidene chloride.

20. The method of manufacturing a laminated film according to claim 18 or 19,
wherein the application liquid includes a surfactant, and
a proportion of the surfactant in non-volatile components of the application liquid is 0.8 to 7.5 mass%.

21. The method of manufacturing a laminated film according to any one of claims 18 to 20,
wherein the application liquid further includes an alcohol solvent.

22. The method of manufacturing a laminated film according to claim 21,
wherein the alcohol solvent includes an alcohol having 1 to 4 carbon atoms.

23. The method of manufacturing a laminated film according to claim 21 or 22,
wherein the alcohol solvent includes 2-propanol.

24. The method of manufacturing a laminated film according to any one of claims 21 to 23,
wherein a proportion of the alcohol solvent in volatile components of the application liquid is 10 to 50 mass%.

25. The method of manufacturing a laminated film according to any one of claims 18 to 24,
wherein a glass transition temperature of the substrate layer is -130°C to -120°C.

26. The method of manufacturing a laminated film according to any one of claims 18 to 25,
wherein an application amount of the application liquid in the application step is 0.3 to 4.5 g/m² in terms of non-volatile components.

27. The method of manufacturing a laminated film according to any one of claims 18 to 26,
wherein a time of the drying step is 5 to 120 seconds.

28. The method of manufacturing a laminated film according to any one of claims 18 to 27,
wherein the anchor coat layer includes a urethane resin and/or a (meth)acrylic resin.
